# EUROPÄISCHE PATENTSCHRIFT

(11) **EP 3 286 042 B1**
(45) Veröffentlichungstag und Bekanntmachung des Hinweises auf die Patenterteilung: **04.12.2019**
(21) Anmeldenummer: 16717408.5
(22) Anmeldetag: 21.04.2016
(51) Int. Cl.: B60R 21/203

(54) **LENKRADEINHEIT, GASSACKMODUL UND LENKRADKÖRPER**
STEERING WHEEL UNIT, AIR BAG MODULE AND STEERING WHEEL BODY
ENSEMBLE VOLANT, MODULE DE COUSSIN GONFLABLE ET UN CORPS DU VOLANT

(30) Priorität: 24.04.2015 DE 102015005281
(43) Veröffentlichungstag der Anmeldung: 28.02.2018
(73) Patentinhaber: Autoliv Development AB, 447 83 Vårgårda (SE)
(72) Erfinder: JACQMARCQ, Thierry, 60850 Cuigy en Bray (FR); GARRET, Gilles, 76000 Rouen (FR); BAILLIVET, Remi, 76220 Dampierre-en-Bray (FR)
(74) Vertreter: Schön, Thilo
(86) Internationale Anmeldenummer: PCT/EP2016/058889
(87) Internationale Veröffentlichungsnummer: WO 2016/170051

(56) Entgegenhaltungen:
- WO-A1-2013/154282
- DE-A1-102008 028 126
- DE-A1-102013 002 557

## Beschreibung

Die Erfindung betrifft eine Lenkradeinheit für ein Kraftfahrzeug nach dem Oberbegriff des Anspruchs 1, ein Gassackmodul zur Verwendung in einer solchen Lenkradeinheit nach Anspruch 14 und einen Lenkradkörper zur Verwendung in einer solchen Lenkradeinheit nach Anspruch 15.

Bei nahezu jedem modernen Personenkraftwagen ist im Nabenbereich des Lenkrades ein Gassackmodul aufgenommen, welches ein Gehäuse, einen mit dem Gehäuse verbundenen Inflator - meist in Form eines Gasgenerators - und einen in das Gehäuse eingefalteten Gassack aufweist. Hierzu weist der Lenkradkörper eine Aufnahme mit einem Boden und einer seitlichen Innenwandung auf. Bei sogenannten "Floating Module"-Konzepten ist das Gehäuse mittels Druckfedern mit dem Lenkradkörper verbunden, sodass es gegen die Kraft dieser Federn zur Betätigung der Hupe niedergedrückt werden kann. Um das Gehäuse in Axialrichtung zu positionieren und um das Gehäuse beim Auftreten des sogenannten Fangschlages am Lenkradkörper zu halten, sind häufig mehrere, in der Regel drei, Axialpositionierungseinheiten vorgesehen, welche zwischen Gehäuse und Lenkradkörper wirken und welche das Modul auch bei Auftreten des Fangschlages am Lenkradkörper halten.

Das Gehäuse besteht in der Regel überwiegend aus Kunststoff, wobei es jedoch aufgrund der großen Kräfte, welche beim Fangschlag auftreten, in der Regel nicht möglich ist, auch die Axialpositionierungseinheiten vollständig aus Kunststoff zu fertigen. Die gattungsbildende DE 10 2010 023 180 A1 schlägt hierzu eine Lenkradeinheit vor, deren Gehäuse eine metallene Grundplatte und eine aus Kunststoff bestehende Gehäuseseitenwand aufweist. Von der metallenen Grundplatte, welche auch den Gehäuseboden bildet, erstrecken sich einstückig mit dieser verbundene O-förmige Laschen nach unten in Richtung des Bodens der Aufnahme für das Gassackmodul. Diese Laschen sind abschnittsweise von Kunststoffabdeckungen, welche sich von der Gehäuseseitenwand erstrecken, abgedeckt. Hierdurch werden modulseitige Axialpositionierungselemente gebildet, in welche jeweils ein sich vom Lenkradkörper erstreckender Haken eingreift. Jedes dieser modulseitigen Axialpositionierungselemente weist ein aus Metall bestehendes Tragteil (die Lasche) und ein dieses Tragteil abschnittsweise abdeckendes Kunststoffelement auf.

Das Dokument WO 2013/154282 offenbart eine Lenkradeinheit nach dem Oberbegriff des Anspruchs 1.

Nachteilig an diesem Stand der Technik ist, dass man ein relativ großes und somit schweres und nur aufwendig herzustellendes Stanz-Biegeteil aus Metall mit den angeformten Laschen benötigt.

Hiervon ausgehend stellt sich die vorliegende Erfindung die Aufgabe, eine gattungsgemäße Lenkradeinheit dahingehend weiterzubilden, dass das Gassackmodul mit geringerem Aufwand und geringerem Gewicht hergestellt werden kann. Diese Aufgabe wird durch eine Lenkradeinheit mit den Merkmalen des Anspruchs 1 gelöst. Ein Gassackmodul zur Verwendung in einer solchen Lenkradeinheit ist in Anspruch 14, ein Lenkradkörper zur Verwendung in einer solchen Lenkradeinheit ist in Anspruch 15 angegeben.

Erfindungsgemäß sind die wenigstens drei Tragteile voneinander separate Elemente. Hierdurch benötigt man extrem wenig Metall, was zunächst zu einer Gewichtsreduzierung führt. Weiterhin können die vergleichsweise kleinen separaten Tragteile einfach hergestellt werden.

Jedes Tragteil kann hierbei entweder, wie in der DE 10 2010 023 180 A1 auch, ein modulseitiges Axialpositionierungselement bilden oder ein Teil desselben sein, oder es kann ein lenkradkörperseitiges Axialpositionierungselement bilden oder ein Teil desselben sein. Es wird zunächst auf den erstgenannten Fall eingegangen:
In diesem Fall sind die Tragteile vorzugsweise an einer umlaufenden Seitenwand des Gehäuses angeordnet. Dies macht die Montage sehr einfach.

Da die Tragteile beim Auftreten des Fangschlags relativ große Zugkräfte aufnehmen müssen, weisen sie vorzugsweise jeweils einen U-förmigen unteren Bereich, über welchen die Ankopplung an den Lenkradkörper erfolgt, auf. Ein oberer Bereich weist dann wenigstens einen Befestigungsabschnitt auf, welcher mit dem Gehäuse verbunden ist. Dieser wenigstens eine Befestigungsabschnitt zeigt vorzugsweise in Richtung des unteren Bereichs und ist in einer Aufnahme des Gehäuses, insbesondere der Seitenwand aufgenommen. Zur Vermeidung von Klappergeräuschen trägt jeder U-förmige Bereich vorzugsweise ein Kunststoffelement, welches das Tragteil zumindest abschnittsweise abdeckt. Dieses Kunststoffelement kann auf das Tragteil aufgerastet oder an dieses angespritzt sein.

Bei der erfindungsgemäßen Ausgestaltung der modulseitigen Axialpositionierungseinheiten befinden sie die Abschnitte der modulseitigen Positionierungselemente, welche mit den lenkradkörperseitigen Positionierungselementen (Haken) in Kontakt sehen, in der Regel unterhalb des Gehäusebodens, also relativ weit weg von der Schwerpunktebene. Um eine exakte Radialpositionierung zu erreichen und um unbeabsichtigte Bewegungen des Moduls in Radialrichtung zu unterbinden, kann es vorteilhaft sein, im Bereich jedes modulseitigen Axialpositionierungselements ein von der Seitenwand des Gehäuses radial auskragendes elastisches Radialpositionierungselement vorzusehen.

In einem ersten bevorzugten Ausführungsbeispiel sind die Tragteile aus Drahtstücken gebogen. Hierdurch sind die Tragteile sehr einfach und kostengünstig herstellbar. In diesem Fall ist es bevorzugt, dass jedes Tragteil zwei Befestigungsabschnitte aufweist, welche durch die Endabschnitte des Drahtstücks gebildet werden. In diesem Fall ist es weiterhin bevorzugt, dass sich die elastischen Radialpositionierungsmittel jeweils zwischen zwei parallelen Schenkeln der U-förmigen Bereiche der Tragteile erstrecken, wobei die elastischen Radialpositionierungsmittel einstückig mit dem Gehäuse sein können.

In einem zweiten bevorzugten Ausführungsbeispiel sind die Tragteile aus Blech erzeugte Stanz-Biegeteile. Dies hat insbesondere den Vorteil, dass die Radialpositionierungselemente einstückig mit den Stanz-Biegeteilen der Axialpositionierungselemente ausgebildet sein können.

In einer zweiten Ausführungsform bilden die Tragteile die modulseitigen Axialpositionierungselemente oder sind Teil derselben. Auch hier können die Tragteile vorzugsweise entweder gebogene Drahtstücke oder Stanz-Biegeteile aus Blech sein.

Das bevorzugte Anwendungsgebiet der Erfindung sind Lenkradeinheiten mit einem oben beschriebenen, sogenannten "floating module". Allerdings kann die erfindungsgemäße Ausgestaltung der modulseitigen oder lenkradkörperseitigen Axialpositionierungselemente auch dann angewendet werden, wenn das Modul zwar mit dem Lenkradkörper verrastet, im Betrieb jedoch nicht gegen dieses niederdrückbar ist.

Häufig wird es zu bevorzugen sein, alle wenigstens drei Axialpositionierungseinheiten identisch (also mit gleichartigen Tragteilen) auszugestalten, zwingend ist dies jedoch nicht. Es ist auch möglich, in einer Lenkradeinheit unterschiedliche Tragteile vorzusehen, beispielsweise eines in Form eines Stanz-Biegeteils und zwei in Form von gebogenen Drahtstücken (oder umgekehrt). Es wäre sogar denkbar, dass in einer Lenkradeinheit ein Tragteil als modulseitiges Axialpositionierungselement (oder als Teil desselben) eingesetzt wird und zwei Tragteile als lenkradkörperseitige Axialpositionierungselemente (oder umgekehrt) eingesetzt werden.

Die Erfindung wird nun anhand von Ausführungsbeispielen mit Bezug auf die Figuren näher erläutert. Hierbei zeigen:
- Figur 1:: eine schematisierte Draufsicht auf den Nabenbereich einer Lenkradeinheit,
- Figur 2:: einen Schnitt entlang der Ebene A-A in Figur 1,
- Figur 3:: einen vergrößerten Schnitt entlang der Ebene B-B in Figur 1, wobei eine Axialpositionierungseinheit und ein Radialpositionierungselement schematisch dargestellt sind,
- Figur 4:: das Gassackmodul der Figuren 1 bis 3 in einer detaillierten perspektivischen Ansicht,
- Figur 5:: das Kunststoffgehäuse des Gassackmodules,
- Figur 6:: das Kunststoffgehäuse der Figur 5 aus einem anderen Blickwinkel,
- Figur 7:: das Kunststoffgehäuse der Figur 6 (aus einem anderen Blickwinkel) sowie die Tragteile der drei modulseitigen Axialpositionierungselemente,
- Figur 8:: das in Figur 7 Gezeigte nach Anordnen der Tragteile am Gehäuse,
- Figur 9:: das in Figur 8 Gezeigte sowie drei Kunststoffelemente, welche an den Tragteilen aufgerastet werden,
- Figur 10:: eine vergrößerte Darstellung eines Ausschnitts der Figur 9, jedoch in umgekehrter Orientierung,
- Figur 11:: ein zweites Ausführungsbeispiel eines modulseitigen Axialpositionierungselementes in einer der Figur 10 entsprechenden Darstellung,
- Figur 12:: ein weiteres Ausführungsbeispiel eines modulseitigen Axialpositionierungselementes in einer der Figur 10 entsprechenden Darstellung,

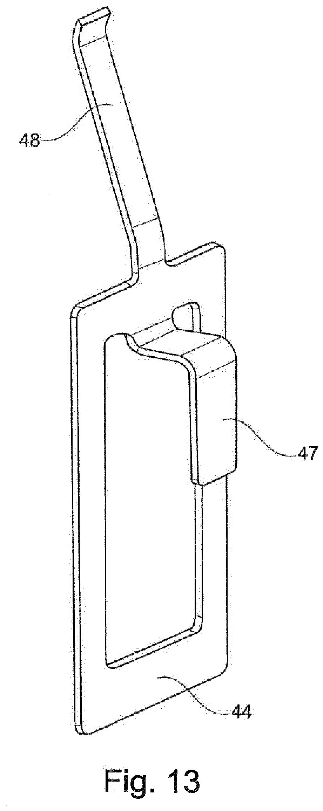

- Figur 13:: das Tragteil des Axialpositionierungselementes des Ausführungsbeispiels der Figur 12,
- Figur 14:: das Tragteil aus Figur 13 mit daran angeordneten Kunststoffelementen,
- Figur 15:: ein erstes Ausführungsbeispiel einer zweite Ausführungsform der Erfindung in einer der Figur 2 entsprechenden Darstellung,
- Figur 16:: das Ausführungsbeispiel der Figur 15 in einer der Figur 3 entsprechenden Darstellung,
- Figur 17:: ein Tragteil eines lenkradkörperseitigen Axialpositionierungselements,
- Figur 18:: im Wesentlichen das, was in Figur 16 dargestellt ist, jedoch in einer detaillierteren, perspektivischen Darstellung,
- Figur 19:: im Wesentlichen das, was in Figur 18 dargestellt ist, jedoch in einer geschnittenen Darstellung,
- Figur 20:: eine lenkradkörperseitige Zwischenplatte, an welcher drei lenkradkörperseitige Axialpositionierungselemente, welche denen, die in Figur 17 dargestellt sind ähnlich sind, befestigt sind,
- Figur 21: eine weitere Variation des ersten Ausführungsbeispiels der zweiten Ausführungsform,
- Figur 22: ein Tragteil eines lenkradkörperseitigen Axialpositionierungselements gemäß einer zweiten Ausführungsform,
- Figur 23: eine lenkradkörperseitige Zwischenplatte, an welcher drei lenkradkörperseitige Axialpositionierungselemente, wie sie in Figur 22 dargestellt sind, befestigt sind und
- Figur 24: einen Teil einer Zwischenplatte aus einer Ansicht von unten, in einem Zustand, in welchem das lenkradkörperseitige Axialpositionierungselement noch nicht montiert ist.

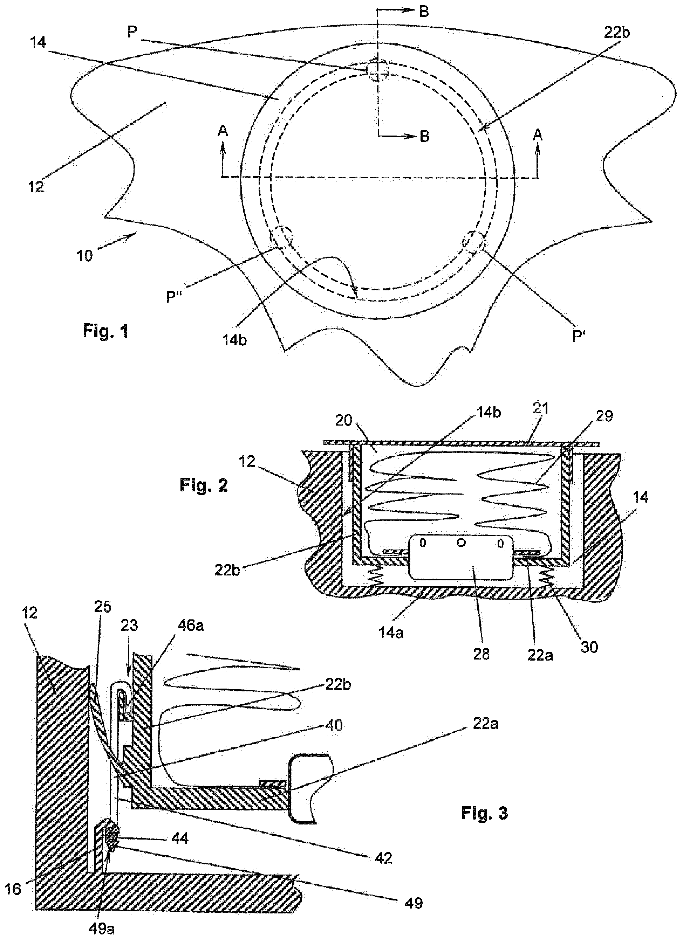

Die Figur 1 zeigt stark schematisiert die Draufsicht auf den Nabenbereich einer Lenkradeinheit 10. Die Figur 2 zeigt, ebenso stark schematisiert, einen Schnitt entlang der Ebene A-A in Figur 1. Die Lenkradeinheit 10 besteht, soweit das für die vorliegende Erfindung wesentlich ist, aus einem Lenkradkörper 12 mit einer Aufnahme 14 im Nabenbereich und einem Gassackmodul 20, welches hierin aufgenommen ist. In Figur 1 sind hierbei die seitliche Innenwandung 14b der Aufnahme 14 sowie die Außenwand einer Seitenwand 22b eines Gehäuses 22 des Gassackmoduls 20 gestrichelt dargestellt. Bei der Lenkradeinheit 10 handelt es sich um eine Lenkradeinheit mit einem sogenannten "Floating Module", wie man dies der Figur 2 entnehmen kann. Dies bedeutet, dass das Gehäuse 22 des Gassackmodules 20 mittels Spiralfedern 30 mit dem Lenkradkörper 12 verbunden ist, nämlich mit dem Boden 14a der Aufnahme für das Gassackmodul.

Das Gassackmodul 20 weist, neben dem erwähnten Gehäuse 22, welches einen Boden 22a und eine Seitenwand 22b aufweist, einen als Inflator dienenden Gasgenerator 28, einen in das Gehäuse 22 eingefalteten Gassack 29 und ein das Gehäuse 22 verschließendes Dach 21 auf. Außer über die Spiralfedern 30 sind Gehäuse 22 und Lenkradeinheit 10 noch über drei Axialpositionierungseinheiten verbunden, wobei im Bereich der genannten Axialpositionierungseinheiten weiterhin jeweils ein elastisches Radialpositionierungselement vorgesehen ist, welches sich zwischen Gehäuse 22 und seitlicher Innenwandung 14b der Aufnahme erstreckt, so dass sich drei Positionierungseinheiten P, P', P" ergeben.

Die Figur 3 zeigt in einem schematisierten Schnitt durch eine solche Positionierungseinheit P, welche aus einer Axialpositionierungseinheit und einem Radialpositionierungselement besteht. An dieser Stelle ist jedoch zu betonen, dass auch Ausführungsbeispiele der Erfindung denkbar sind, bei denen im Bereich der Axialpositionierungseinheiten kein zusätzliches Radialpositionierungselement vorgesehen ist. Sämtliche Positionierungseinheiten sind gleich aufgebaut, sodass die Beschreibung einer dieser Positionierungseinheiten ausreichend ist.

Jede Axialpositionierungseinheit weist ein mit dem Gehäuse 22 verbundenes modulseitiges Axialpositionierungselement 40 und einen lenkradkörperseitigen Haltehaken 16 auf, welcher in einen Abschnitt des modulseitigen Axialpositionierungselementes 40 eingreift.

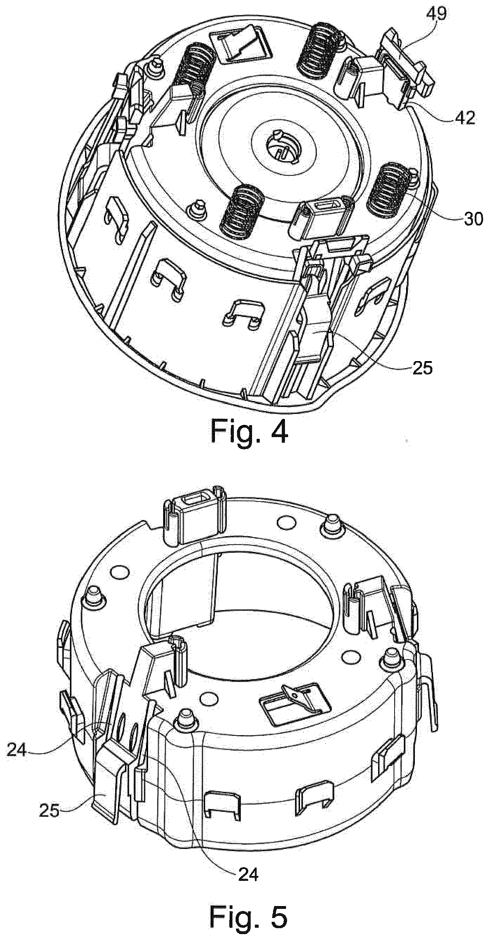

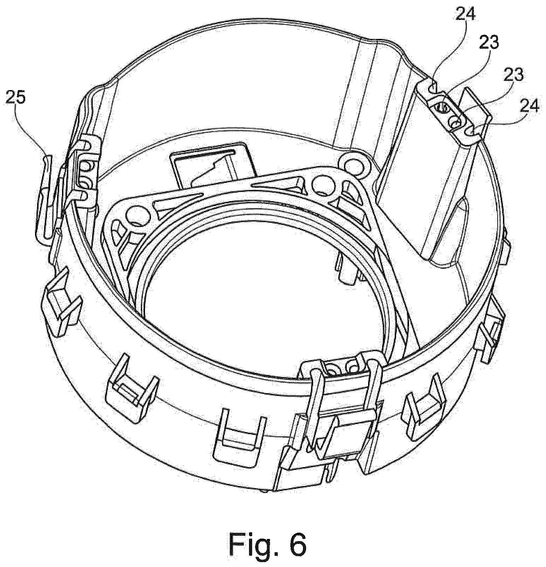

Ein erstes Ausführungsbeispiel des modulseitigen Axialpositionierungselementes 40 und dessen Befestigung am Gehäuse 22 wird nun im Detail mit Bezug auf die Figuren 3 bis 10 näher erläutert, wobei die Figur 3 eine stark schematisierte Darstellung ist, während die Figuren 4 bis 10 detailgetreue perspektivische Darstellungen sind.

Das modulseitige Axialpositionierungselement besteht aus zwei Teilen, nämlich aus einem Tragteil 42 und aus einem auf das Tragteil 42 aufgerasteten Kunststoffelement 49. Das metallene, insbesondere stählerne Tragteil 42 ist im ersten Ausführungsbeispiel ein Drahtelement, d.h. es ist aus einem Drahtstück gebogen. Dieses Drahtelement weist einen U-förmigen unteren Bereich 44 und einen oberen Bereich 46 auf, wobei der obere Bereich zwei Befestigungsabschnitte aufweist, welche mit dem Gehäuse 22 verbunden sind. Die Befestigungsabschnitte sind die beiden sich parallel zueinander in Richtung des U-förmigen unteren Bereiches 44 erstreckenden Endabschnitte 46a, 46b des Drahtelementes. Für jeden Endabschnitt 46a, 46b eines Drahtabschnittes weist die Seitenwand 22b eine Aufnahmebohrung 23 auf (wobei der Begriff "Bohrung" nicht produktionstechnisch, sondern geometrisch zu verstehen ist). Diese Aufnahmebohrungen 23 erstrecken sich in axialer Richtung. Benachbart zu jeder Aufnahmebohrung 23 erstreckt sich auf der Außenseite der Seitenwand 22b eine Nut 24 zur Aufnahme eines Schenkels eines Drahtelementes. Zwischen zwei solcher Nuten 24 erstreckt sich jeweils ein L-förmiger elastischer Radialpositionierungsarm 25 von der Seitenwand 22b nach außen. Das gesamte Gehäuse 22 kann ein einstückiges Kunststoff-Spritzgussteil sein.

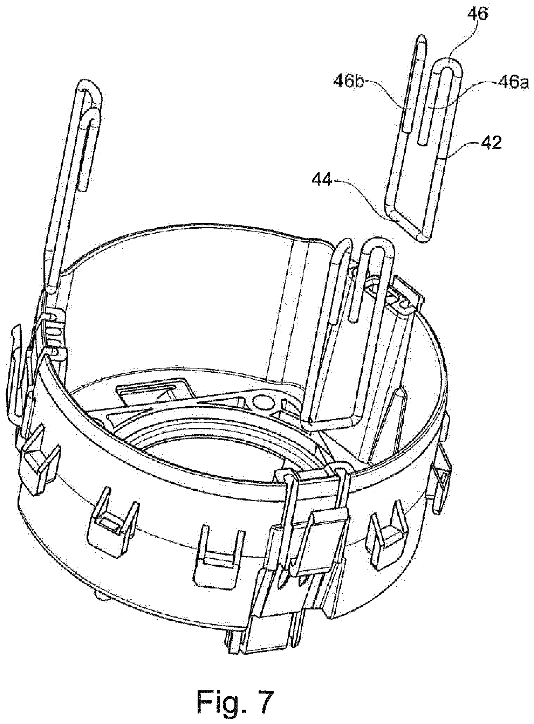

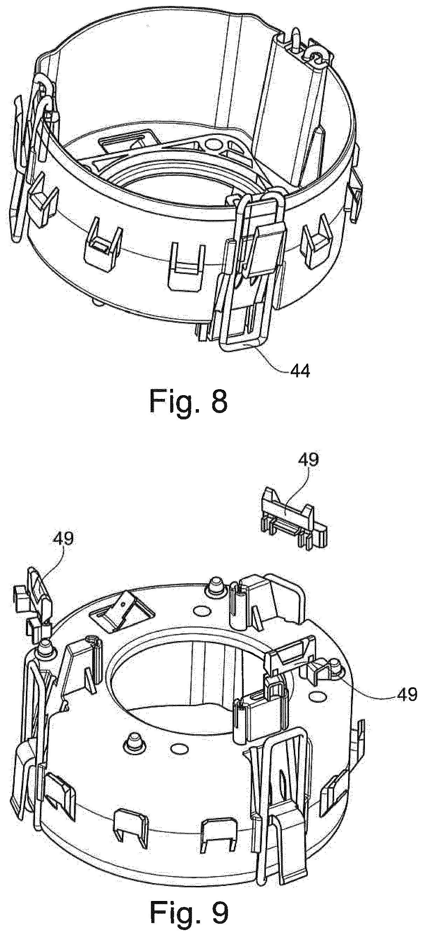

Die Montage der modulseitigen Axialpositionierungselemente am Gehäuse 22 ist sehr einfach: zunächst werden die Tragteile (d.h. die Drahtelemente) mit ihren Enden in die dafür vorgesehenen Aufnahmebohrungen 23 eingesteckt (s. hierzu Figuren 7 und 8). Anschließend wird auf jeden U-förmigen unteren Bereich 44 eines Tragteils 42 ein Kunststoffelement 49 aufgerastet (s. hierzu insbesondere Figuren 4, 9 und 10). Eine Montage der Radialpositionierungselemente ist nicht notwendig, da diese ja einstückig am Gehäuse angeformt sind.

Nach Abschluss der Gesamtmontage des Gassackmodules 20 (Anordnen des Gasgenerators, Einfalten des Gassackes, Anordnen des Daches 21), kann das Gassackmodul 20 einfach mit dem Lenkradkörper 12 verrastet werden, wobei das Verrasten unter elastischer Deformation der Tragteile 42 erfolgt. Um dies zu ermöglichen, weisen die Kunststoffelemente 49 Schrägen 49a auf.

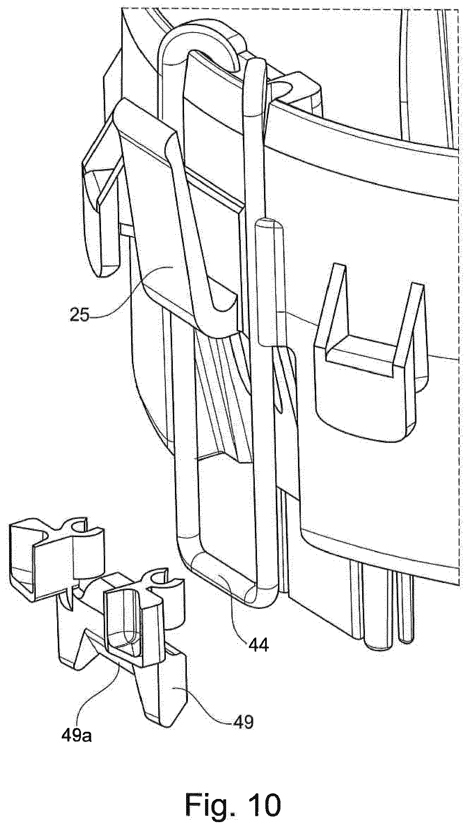

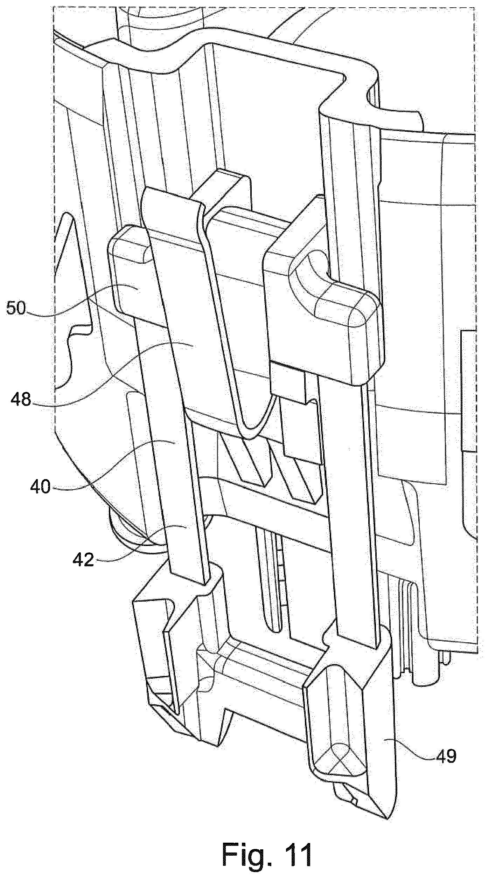

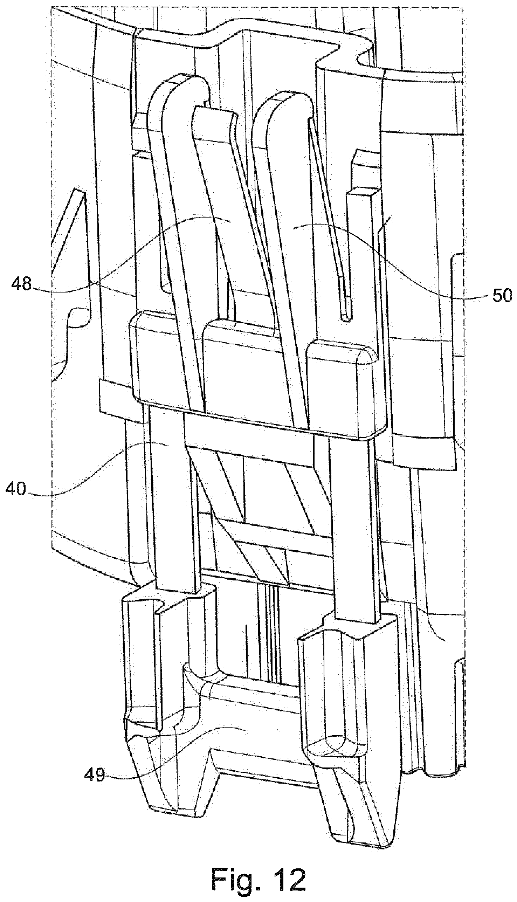

Die Figur 11 zeigt ein zweites Ausführungsbeispiel eines modulseitigen Axialpositionierungselementes 40 in einer der Figur 10 entsprechenden Darstellung. Die Figur 12 zeigt das Tragteil 42 dieses modulseitigen Axialpositionierungselementes 40. Im Gegensatz zum ersten Ausführungsbeispiel ist das Tragteil 42 hier ein Stanz-Biegeteil mit einem O-förmigen Hauptabschnitt, einem sich vom oberen Ende des Os erstreckenden Befestigungsarm 47 (wobei sich dieser Befestigungsarm in Richtung des unteren Ende des Os, welcher den U-förmigen unteren Bereich 44 bildet, erstreckt) und einen sich ebenfalls vom oberen Ende des Os erstreckenden elastischen Radialpositionierungsarm 48 des Tragteils. Zur Aufnahme des Verbindungsarmes 47 weist die Seitenwand 22b des Gehäuses 22 eine entsprechende schlitzförmige Aufnahme auf.

Am U-förmigen unteren Bereich 44 des Tragteils 42 ist auch hier ein Kunststoffelement 49 angeordnet, wobei dieses im gezeigten Ausführungsbeispiel durch Umspritzen des U-förmigen unteren Bereiches 44 erzeugt wird. Auch das obere Ende des O-förmigen Bereiches ist von einem Kunststoffelement (weiteres Kunststoffelement 50) umspritzt.

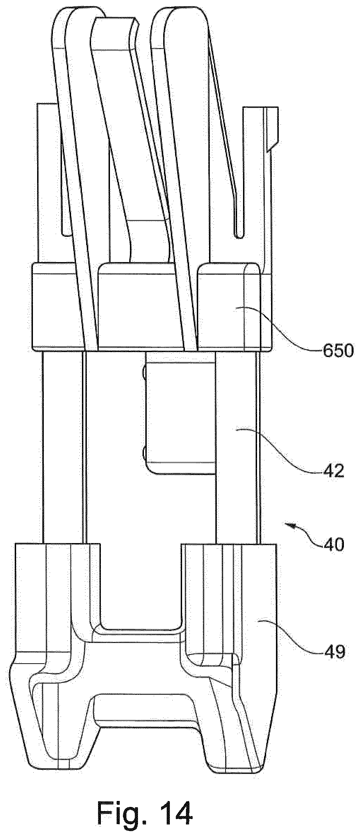

Die Figur 14 zeigt eine Variante zum eben genannten Ausführungsbeispiel, welche sich ausschließlich in der Form des elastischen Radialpositionierungsarmes 48 des Tragteiles unterscheidet.

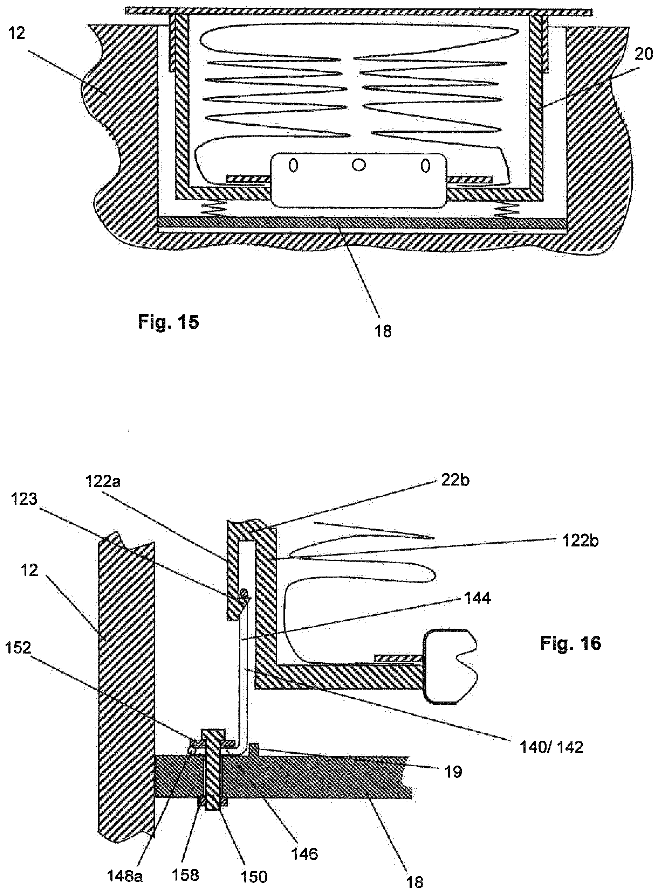

Mit Bezug auf die Figuren 15 bis 24 wird eine zweite Ausführungsform der Erfindung beschrieben. Übereinstimmend mit der zuerst beschriebenen Ausführungsform weist auch die zweite Ausführungsform drei separate, aus Metall bestehende Tragteile 142 auf. Im Gegensatz zur ersten Ausführungsform bilden diese jedoch nicht die modulseitigen Axialpositionierungselemente (oder sind Teile hiervon) sondern sie bilden die lenkradkörperseitigen Axialpositionierungselemente 140. Im Unterschied zu den beschriebenen Ausführungsbeispielen der ersten Ausführungsform weist der Lenkradkörper 12 in seinem Nabenbereich eine Zwischenplatte 18 (welche auch als Hupenplatte bezeichnet werden könnte) auf, welche gemäß der hier getroffenen Definitionen ein Teil des Lenkradkörpers 12 ist. Es ist an dieser Stelle zu betonen, dass eine solche Zwischenplatte 18 auch bei den Ausführungsbeispielen der ersten Ausführungsform vorhanden sein könnte; in diesem Fall könnten sich beispielsweise die Haltehaken 16 von dieser Zwischenplatte 18 erstrecken, dies ist in den Figuren der ersten Ausführungsform jedoch nicht dargestellt. Weiterhin ist zu betonen, dass eine Zwischenplatte 18, wie sie bei den zur zweiten Ausführungsform beschriebenen Ausführungsbeispielen vorhanden ist, bei der zweiten Ausführungsform nicht zwingend ist; grundsätzlich könnten sich die Tragteile 142 auch unmittelbar vom Skelett des Lenkradkörpers 12 erstrecken. Die Position der Zwischenplatte 18 wird mit Blick auf die Figur 15 deutlich, welche ansonsten im Wesentlichen der Figur 2 entspricht. Die Zwischenplatte 18 ist zumindest mittelbar fest mit dem Skelett des Lenkradkörpers verbunden.

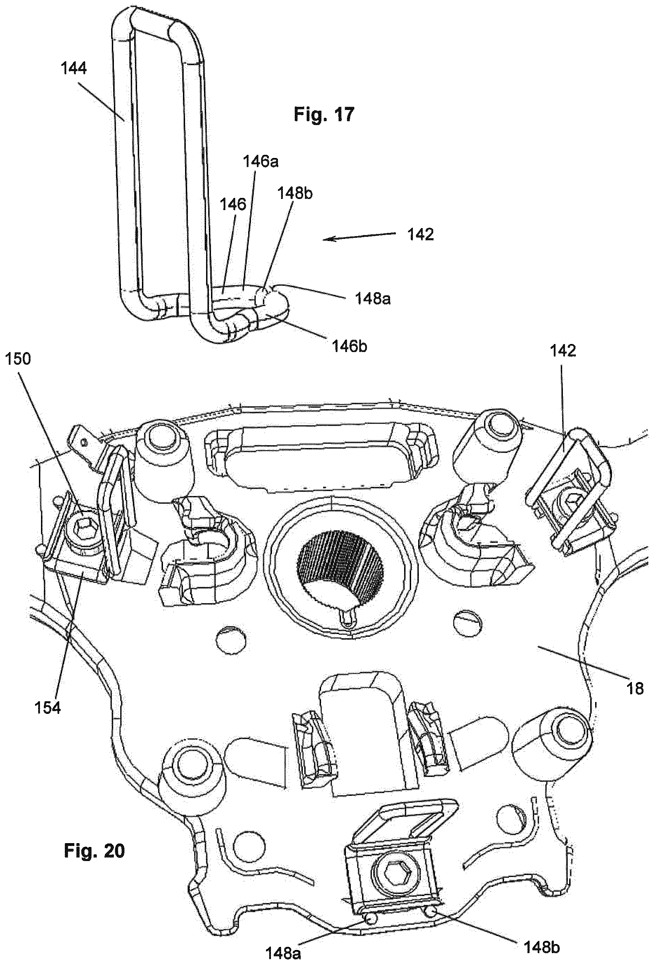

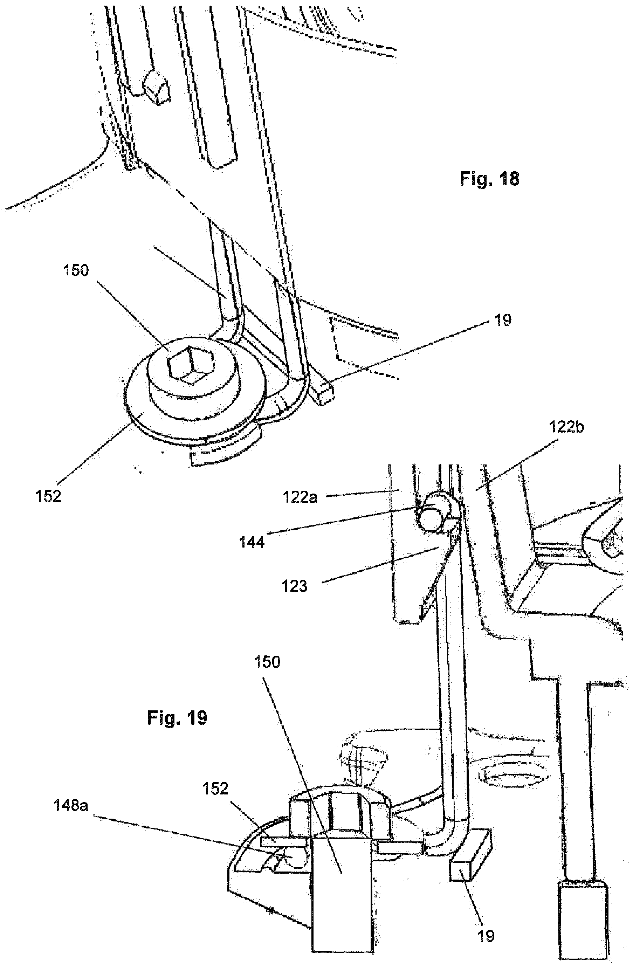

Wie man der Figur 16, welche der Figur 3 des ersten Ausführungsbeispiels der ersten Ausführungsform entspricht, entnehmen kann, ist jedes Tragteil 142 eines lenkradseitigen Axialpositionierungselementes 140 mit der Zwischenplatte 18 verschraubt (dargestellt) oder vernietet (nicht dargestellt). Wie dies insbesondere der Figur 17 zu entnehmen ist, ist das Tragteil 142, wie im ersten Ausführungsbeispiel der ersten Ausführungsform, ein gebogenes Drahtstück. Das Tragteil 142 weist (auch hier entsprechend dem ersten Ausführungsbeispiel der ersten Ausführungsform) einen U-förmigen Bereich auf, dieser ist hier jedoch der obere Bereich (U-förmiger oberer Bereich 144). Vom U-förmigen oberen Bereich 144 knickt ein Befestigungsbereich 146 im Wesentlichen rechtwinklig (vorzugsweise genau rechtwinklig) ab, so dass er im montierten Zustand in der Radialebene des Lenkradkörpers 12 liegt. Der Befestigungsbereich 146 wird durch die beiden Endabschnitte 146a, 146 des Drahtstücks gebildet und endet an den beiden Enden 148a, 148b des Drahtabschnitts. Die beiden Enden 146a, 146b des Tragteils 142 zeigen aufeinander zu. Dies ist jedoch, wie man bei nachfolgenden Ausführungsbeispielen sehen wird, nicht zwingend. Die Befestigung an der Zwischenplatte 18 erfolgt, wie man dies insbesondere den Figuren 18 und 19 entnehmen kann, mittels einer Schraube 150, einer Unterlegscheibe 152 und einer Mutter 158. Zur genauen Positionierung in der Radialrichtung ist ein Anschlag 19, wie er in den Figuren 16, 18 und 19 dargestellt ist, an der Zwischenplatte 19 vorgesehen.

Als modulseitiges Axialpositionierungselement dient, wie man dies insbesondere den Figuren 16 und 19 entnehmen kann, ein Vorsprung 123 der Seitenwand 22b des Gehäuses 22, welche in den gezeigten Ausführungsbeispielen der zweiten Ausführungsform im Bereich der Axialpositionierungselemente doppellagig mit einer äußeren Lage 122a und einer inneren Lage 122b ausgeführt ist. Die Vorsprünge 123 befinden sich hierbei jeweils an der äußeren Seitenwand, sodass das das Tragteil 142 von der inneren Lage 122b beabstandet ist, was zu bevorzugen ist.

Die Figur 20 zeigt eine Variation zum eben genannten Ausführungsbeispiel. Der Unterschied ist hier, dass statt runder Unterlegscheiben eckige Unterlegplatten 154 verwendet werden und dass die Enden 148a, 148b der Tragteile 142 nach oben weisen und sich parallel zueinander erstrecken. Hierdurch kann eine sehr genaue Radialpositionierung auch ohne das Vorhandensein von Anschlägen erreicht werden.

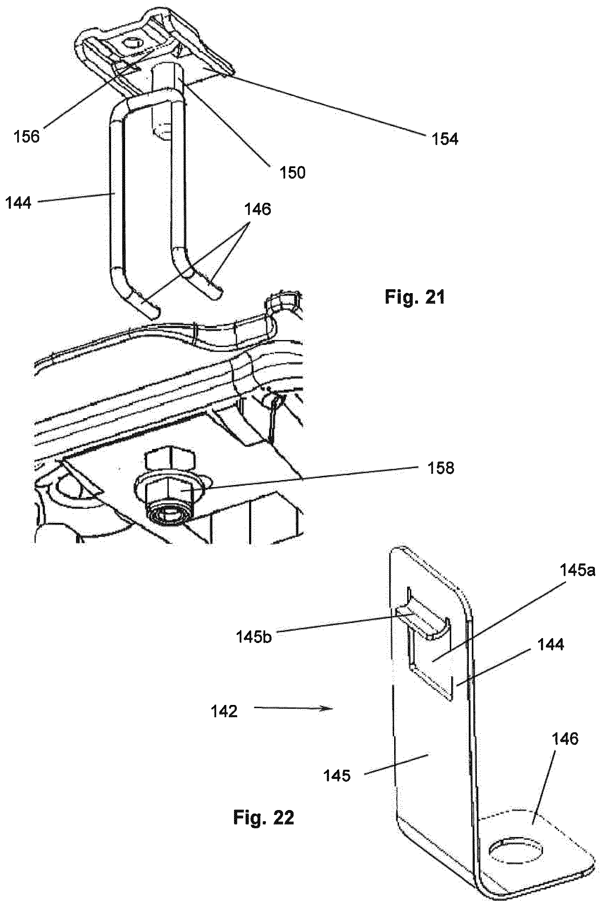

Die Figur 21 zeigt eine weitere Variation. Hier sind die Unterlegplatten 154 geschlitzt, so dass sich jeweils ein unterer Abschnitt des U-förmigen oberen Bereichs 146 durch einen Schlitz 156 erstreckt.

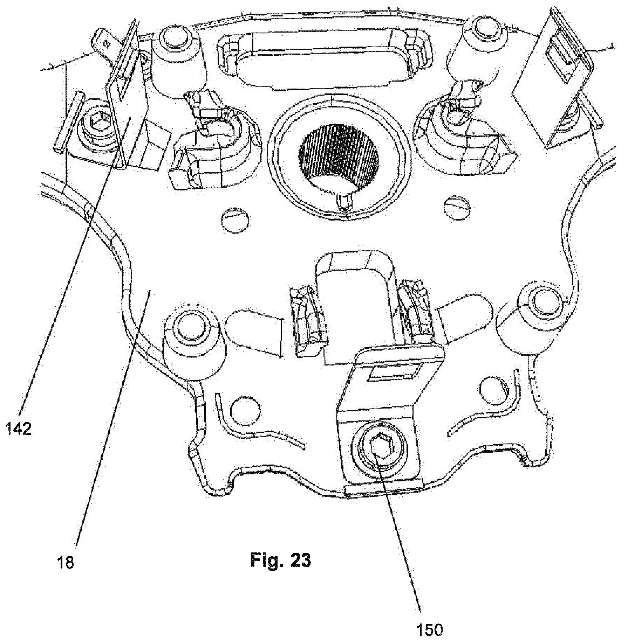

Die Figuren 22 und 23 zeigen ein zweites Ausführungsbeispiel der zweiten Ausführungsform der Erfindung. Die Tragteile 142 sind hier als Stanz-Biegeteile aus Blech, insbesondere aus Stahlblech, mit einem oberen Abschnitt 145 und einem Befestigungsbereich 146 ausgebildet, wobei oberer Abschnitt 145 und Befestigungsbereich 146 vorzugsweise senkrecht zueinander stehen. Der Befestigungsbereich 146 weist ein Loch zum Durchführen einer Schraube 150 oder eines Bolzens auf. Im oberen Abschnitt 145 ist ein Fenster 145a eingestanzt, sodass dieser einen U-förmigen oberen Bereich 144 aufweist. In den gezeigten bevorzugten Ausführungsbeispielen erstreckt sich von der oberen Kante des Fensters 145a jeweils ein sich im Wesentlichen horizontal erstreckender herausgebogener Abschnitt 145b, sodass sich eine gegenüber der reinen Kante vergrößerte Auflagefläche ergibt. In das Fenster 145a greift jeweils (wie im ersten Ausführungsbeispiel auch) ein Vorsprung des Gehäuses ein.

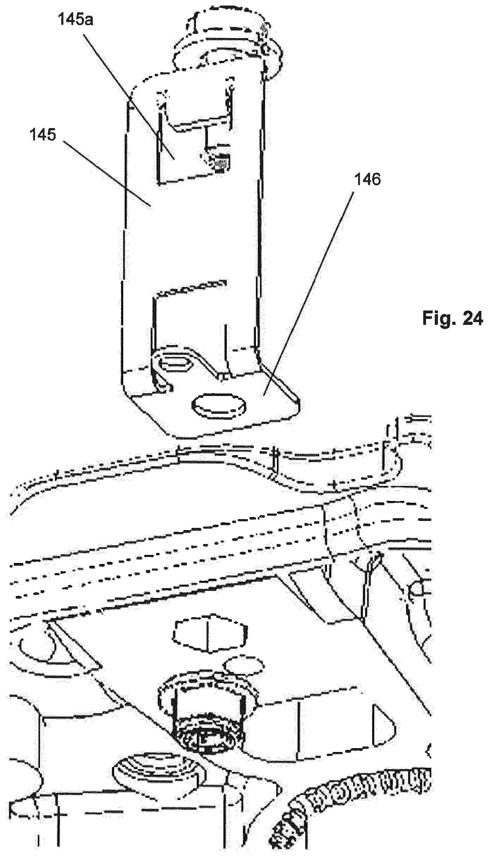

Die Figur 24 zeigt eine Variation zum zweiten Ausführungsbeispiel. Hier erstreckt sich der Befestigungsbereich 146 zu beiden Seiten des oberen Abschnitts 145.

### Bezugszeichenliste

- 10: Lenkradeinheit
- 12: Lenkradkörper
- 14: Aufnahme für Gassackmodul
- 14a: Boden der Aufnahme
- 14b: seitliche Innenwandung der Aufnahme
- 16: Haltehaken
- 18: Zwischenplatte
- 19: Anschlag
- 20: Gassackmodul
- 21: Dach
- 22: Gehäuse
- 22a: Boden
- 22b: Seitenwand
- 23: Aufnahmebohrung
- 24: Nut
- 25: elastischer Radialpositionierungsarm des Gehäuses
- 28: Gasgenerator
- 29: Gassack
- 30: Spiralfeder
- 32: Kontaktfeder
- 40: modulseitiges Axialpositionierungselement
- 42: Tragteil
- 44: U-förmiger unterer Bereich
- 46: oberer Bereich
- 46a, 46b: Endabschnitte des Drahtabschnitts
- 48: elastischer Radialpositionierungsarm des Tragteils
- 47: Befestigungsarm
- 49: Kunststoffelement
- 50: weiteres Kunststoffelement
- 122a: äußere Lage der Seitenwand
- 122b: innere Lage der Seitenwand
- 123: Vorsprung
- 140: lenkradkörperseitiges Axialpositionierungselement
- 142: Tragteil
- 144: U-förmiger oberer Bereich
- 145: oberer Abschnitt
- 145a: Fenster
- 145b: herausgebogener Abschnitt
- 146: Befestigungsbereich
- 150: Schraube
- 152: Unterlegscheibe
- 154: Unterlegplatte
- 156: Schlitz
- 158: Mutter
- 146a,b: Endabschnitte des Drahtabschnitts
- 148a,b: Enden des Drahtabschnitts
- P, P', P": Positionierungseinheit

## Patentansprüche

1. Lenkradeinheit (10) für ein Kraftfahrzeug mit
einem Lenkradkörper (12),
einem im Nabenbereich des Lenkradkörpers (12) aufgenommenen, vorzugsweise gegen die Kraft eines Federelements gegen den Lenkradkörper (12) niederdrückbaren Gassackmodul (20), welches ein Gehäuse (22), einen mit dem Gehäuse (22) verbundenen Inflator und einen in das Gehäuse (22) eingefalteten Gassack (29) aufweist,
wenigstens drei Axialpositionierungseinheiten, welche die Axialposition des nicht niedergedrückten Gehäuses (22) bezüglich des Lenkradkörpers (12) definieren,
wobei jede der wenigstens drei Axialpositionierungseinheiten ein mit dem Gehäuse (22) verbundenes modulseitiges Axialpositionierungselement (40) oder ein mit dem Lenkradkörper verbundenes lenkradkörperseitiges Axialpositionierungselement (140) aufweist, welches ein aus Metall bestehendes Tragteil (42) aufweist,
**dadurch gekennzeichnet**, die wenigstens drei Tragteile (42) voneinander separate, nicht einstückig miteinander verbundene Elemente sind.

2. Lenkradeinheit nach Anspruch 1, **dadurch gekennzeichnet, dass** wenigstens ein Tragteil (42) ein modulseitiges Axialpositionierungselement (40) oder ein Teil desselben ist und vorzugsweise an einer umlaufenden Seitenwand (22b) des Gehäuses (22) angeordnet ist.

3. Lenkradeinheit nach Anspruch 2, **dadurch gekennzeichnet, dass** das Tragteil (42) einen U-förmigen unteren Bereich (44) und einen oberen Bereich (46) mit wenigstens einem Befestigungsabschnitt, welcher mit dem Gehäuse (22) verbunden ist, aufweist,
wobei der wenigstens eine Befestigungsabschnitt vorzugsweise in Richtung des U-förmigen unteren Bereichs (44) zeigt und in einer Aufnahme des Gehäuses (22), insbesondere der Seitenwand (22b), aufgenommen ist.

4. Lenkradeinheit nach Anspruch 3, **dadurch gekennzeichnet, dass** der U-förmige untere Bereich (44) ein Kunststoffelement (49) trägt, welches das Tragteil (42) zumindest abschnittsweise abdeckt, wobei das Kunststoffelement (49) vorzugsweise auf das Tragteil (42) aufgerastet ist.

5. Lenkradeinheit nach einem der vorangehenden Ansprüche, **dadurch gekennzeichnet, dass** im Bereich wenigstens eines modulseitigen Axialpositionierungselements (40) ein radial auskragendes elastisches Radialpositionierungselement vorgesehen ist.

6. Lenkradeinheit nach einem der vorangehenden Ansprüche, **dadurch gekennzeichnet, dass** wenigstens eines der Tragteile (42) ein aus Blech erzeugtes Stanz-Biegeteil ist, mit welchem vorzugsweise das Radialpositionierungselement des Anspruchs 5 einstückig ausgebildet ist.

7. Lenkradeinheit nach einem der vorangehenden Ansprüche, **dadurch gekennzeichnet, dass** wenigstens eines der Tragteile (42) aus einem Drahtstück gebogen ist.

8. Lenkradeinheit nach einem der Ansprüche 3 bis 5 und Anspruch 7, **dadurch gekennzeichnet, dass** das Tragteil (42) zwei Befestigungsabschnitte aufweist, welche in Richtung des U-förmigen unteren Bereichs (44) zeigen, jeweils in einer Aufnahme des Gehäuses aufgenommen sind und welche durch die Endabschnitte (46a, 46b) des Drahtstücks gebildet werden.

9. Lenkradeinheit nach Anspruch 5 und einem der Ansprüche 7 oder 8, **dadurch gekennzeichnet, dass** sich das zugeordnete elastische Radialpositionierungselement jeweils zwischen zwei parallelen Schenkeln des U-förmigen Bereiches erstreckt.

10. Lenkradeinheit nach Anspruch 1 oder Anspruch 2, **dadurch gekennzeichnet, dass** wenigstens ein Tragteil (142) Teil eines lenkradkörperseitigen Axialpositionierungselements (140) ist oder ein lenkradkörperseitiges Axialpositionierungselement (140) bildet und am Boden (22a) des Nabenbereichs des Lenkradkörpers (12) mit dem Lenkradkörper (12) verbunden ist.

11. Lenkradeinheit nach Anspruch 10, **dadurch gekennzeichnet, dass** das Tragteil (142) einen U-förmigen oberen Bereich (144) und einen Befestigungsbereich (146), welcher mit dem Lenkradkörper (22) verbunden ist, aufweist, wobei sich der Befestigungsbereich (146) vorzugsweise im Wesentlichen parallel zum Boden (22a) des Nabenbereichs, senkrecht zur Axialrichtung erstreckt und mit dem Boden beispielsweise verschraubt oder vernietet ist.

12. Lenkradeinheit nach einem der vorangehenden Ansprüche 10 oder 11, **dadurch gekennzeichnet, dass** das Tragteil (142) entweder ein aus Blech erzeugtes Stanz-Biegeteil mit einem eingestanzten Fenster (145a) ist, oder aus einem Drahtstück gebogen ist, dessen Befestigungsbereich (146) vorzugsweise aus zwei Endabschnitten (146a, 146b) des Drahtstücks gebildet ist.

13. Lenkradeinheit nach einem der Ansprüche 10 bis 12, **dadurch gekennzeichnet, dass** das Gehäuse eine Seitenwand (22b) aufweist, welche wenigstens einen als moduiseitiges Axialpositionierungselement dienenden Vorsprung (123) trägt, wobei der Vorsprung (123) vorzugsweise einstückig mit der Seitenwand (22b) ausgebildet ist,
wobei die Seitenwand (22b) vorzugsweise zumindest abschnittsweise zweilagig mit einer äußeren Lage (122a) und einer inneren Lage (122b) ausgebildet ist und dass sich der Vorsprung innerhalb der durch die beiden Lagen (122a, 122b) gebildeten Kavität befindet, wobei der Vorsprung (123) vorzugsweise an der äußeren Lage (122a) angeordnet ist.

14. Gassackmodul mit drei modulseitigen Axialpositionierungselementen zur Verwendung in einer Lenkradeinheit (10) nach einem der Ansprüche 2 bis 9.

15. Lenkradkörper mit drei lenkradkörperseitigen Axialpositionierungselementen zur Verwendung in einer Lenkradeinheit (10) nach einem der Ansprüche 10 bis 13.

## Claims

1. Steering wheel unit (10) for a motor vehicle with
a steering wheel body (12),
an airbag module (20), which is accommodated in the hub region of the steering wheel body (12), can preferably be pressed down against the steering wheel body (12) against the force of a spring element, and has a housing (22), an inflator connected to the housing and an airbag (29) folded into the housing (22),
at least three axial positioning units, which define the axial position of the non-pressed-down housing (22) with respect to the steering wheel body (12),
wherein each of the at least three axial positioning units has a module-side axial positioning element (40) connected to the housing (22), or a steering-wheel-body-side axial positioning element (140) connected to the steering wheel body, which element has a support part (42) consisting of metal, **characterised in that** the at least three support parts (42) are separate elements that are not connected to one another in one piece.

2. Steering wheel unit according to claim 1, **characterised in that** at least one support part (42) is a module-side axial positioning element (40) or a part of the same and is preferably arranged on a surrounding side wall (22b) of the housing (22).

3. Steering wheel unit according to claim 2, **characterised in that** the support part (42) has a U-shaped lower region (44) and an upper region (46) with at least one attachment section, which is connected to the housing (22), wherein the at least one attachment section points preferably in the direction of the U-shaped lower region (44) and is accommodated in a seat in the housing (22), in particular in the side wall (22b).

4. Steering wheel unit according to claim 3, **characterised in that** the U-shaped lower region (44) bears a plastic element (49), which covers the support part (42) at least sectionally, wherein the plastic element (49) is preferably snapped onto the support part (42).

5. Steering wheel unit according to any one of the preceding claims, **characterised in that** a radially projecting elastic radial positioning element is provided in the region of at least one module-side axial positioning element (40).

6. Steering wheel unit according to any one of the preceding claims, **characterised in that** at least one of the support parts (42) is a punched and bent part produced from sheet metal, with which preferably the radial positioning element of claim 5 is formed in one piece.

7. Steering wheel unit according to any one of the preceding claims, **characterised in that** at least one of the support parts (42) is bent from a piece of wire.

8. Steering wheel unit according to any one of claims 3 to 5 and claim 7, **characterised in that** the support part (42) has two attachment sections, which point in the direction of the U-shaped lower region (44), are each accommodated in a seat of the housing, and which are formed by the end sections (46a, 46b) of the piece of wire.

9. Steering wheel unit according to claim 5 and one of claims 7 or 8, **characterised in that** the associated elastic radial positioning element extends in each case between two parallel limbs of the U-shaped region.

10. Steering wheel unit according to claim 1 or claim 2, **characterised in that** at least one support part (142) is part of a steering-wheel-body-side axial positioning element (140) or forms a steering-wheel-body-side axial positioning element (140) and is connected to the steering wheel body (12) at the base (22a) of the hub region of the steering wheel body (12).

11. Steering wheel unit according to claim 10, **characterised in that** the support part (142) has a U-shaped upper region (144) and an attachment region (146), which is connected to the steering wheel body (22), wherein the attachment region (146) extends preferably substantially parallel to the base (22a) of the hub region, perpendicular to the axial direction and is screwed or riveted to the base, for example.

12. Steering wheel unit according to one of the preceding claims 10 or 11, **characterised in that** the support part (142) is either a punched and bent part produced from sheet metal with a punched window (145a), or is bent from a piece of wire, the attachment region (146) of which part is preferably formed from two end sections (146a, 146b) of the piece of wire.

13. Steering wheel unit according to any one of claims 10 to 12, **characterised in that** the housing has a side wall (22b), which bears at least one projection (123) acting as a module-side axial positioning element, wherein the projection (123) is preferably formed in one piece with the side wall (22b), wherein the side wall (22b) is preferably formed in two layers, at least sectionally, with an outer layer (122a) and an inner layer (122b), and the projection is located inside the cavity formed by the two layers (122a, 122b), wherein the projection (123) is preferably arranged on the outer layer (122a).

14. Airbag module with three module-side axial positioning elements for use in a steering wheel unit (10) according to any one of claims 2 to 9.

15. Steering wheel body with three steering-wheel-body-side axial positioning elements for use in a steering wheel unit (10) according to any one of claims 10 to 13.

## Revendications

1. Ensemble volant (10) pour un véhicule à moteur comprenant
un corps de volant (12),
un module de coussin gonflable (20) logé dans une zone de moyeu du corps de volant (12), pouvant de préférence être enfoncé contre le corps de volant (12) contre la force d'un élément formant ressort, ledit module de coussin gonflable comportant un boîtier (22), un gonfleur relié au boîtier (22) et un coussin gonflable (29) replié dans le boîtier (22),
au moins trois unités de positionnement axial, qui définissent la position axiale du boîtier (22) non enfoncé par rapport au corps de volant (12), chacune des au moins trois unités de positionnement axial comportant un élément de positionnement axial (40) côté module relié au boîtier (22) ou un élément de positionnement axial (140) côté corps de volant relié au corps de volant, ledit élément de positionnement axial comportant une pièce de support (42) constituée de métal,
**caractérisé en ce que** les au moins trois pièces de support (42) sont des éléments séparés les uns des autres, non reliés les uns aux autres d'un seul tenant.

2. Ensemble volant selon la revendication 1, **caractérisé en ce qu'**au moins une pièce de support (42) est un élément de positionnement axial (40) côté module ou une partie de celui-ci et est de préférence disposée sur une paroi latérale (22b) périphérique du boîtier (22).

3. Ensemble volant selon la revendication 2, **caractérisé en ce que** la pièce de support (42) comporte une zone inférieure (44) en forme de U et une zone supérieure (46) dotée d'au moins une portion de fixation, qui est reliée au boîtier (22),
l'au moins une portion de fixation étant orientée de préférence en direction de la zone inférieure (44) en forme de U et étant reçue dans un logement du boîtier (22), en particulier de la paroi latérale (22b).

4. Ensemble volant selon la revendication 3, **caractérisé en ce que** la zone inférieure (44) en forme de U porte un élément en matière plastique (49), qui recouvre la pièce de support (42) au moins sur certaines parties, l'élément en matière plastique (49) étant de préférence encliqueté sur la pièce de support (42).

5. Ensemble volant selon l'une des revendications précédentes, **caractérisé en ce que**, dans la zone d'au moins un élément de positionnement axial (40) côté module, se trouve un élément de positionnement radial élastique faisant saillie radialement.

6. Ensemble volant selon l'une des revendications précédentes, **caractérisé en ce qu'**au moins une des pièces de support (42) est une pièce découpée pliée fabriquée en tôle, avec laquelle l'élément de positionnement radial de la revendication 5 est de préférence formé d'un seul tenant.

7. Ensemble volant selon l'une des revendications précédentes, **caractérisé en ce qu'**au moins une des pièces de support (42) est pliée à partir d'un morceau de fil métallique.

8. Ensemble volant selon l'une des revendications 3 à 5 et la revendication 7, **caractérisé en ce que** la pièce de support (42) comporte deux portions de fixation, qui sont orientées en direction de la zone inférieure (44) en forme de U, sont reçues respectivement dans un logement du boîtier et qui sont formées par les portions d'extrémité (46a, 46b) du morceau de fil métallique.

9. Ensemble volant selon la revendication 5 et une des revendications 7 et 8, **caractérisé en ce que** l'élément de positionnement radial élastique associé s'étend respectivement entre deux branches parallèles de la zone en forme de U.

10. Ensemble volant selon la revendication 1 ou la revendication 2, **caractérisé en ce qu'**au moins une pièce de support (142) fait partie d'un élément de positionnement axial (140) côté corps de volant ou forme un élément de positionnement axial (140) côté corps de volant et est reliée au corps de volant (12) sur le fond (22a) de la zone de moyeu du corps de volant (12).

11. Ensemble volant selon la revendication 10, **caractérisé en ce que** la pièce de support (142) comporte une zone supérieure (144) en forme de U et une zone de fixation (146), qui est reliée au corps de volant (22), la zone de fixation (146) s'étendant de préférence sensiblement parallèlement au fond (22a) de la zone de moyeu, perpendiculairement à la direction axiale et est par exemple vissée ou rivetée au fond.

12. Ensemble volant selon l'une des revendications précédentes 10 et 11, **caractérisé en ce que** la pièce de support (142) est soit une pièce découpée pliée fabriquée en tôle avec une fenêtre (145a) découpée, soit est pliée à partir d'un morceau de fil métallique, dont la zone de fixation (146) est formée de préférence à partir de deux portions d'extrémité (146a, 146b) du morceau de fil métallique.

13. Ensemble volant selon l'une des revendications 10 à 12, **caractérisé en ce que** le boîtier comporte une paroi latérale (22b), qui porte au moins une saillie (123) servant élément de positionnement axial côté module, la saillie (123) étant de préférence réalisée d'un seul tenant avec la paroi latérale (22b),
la paroi latérale (22b) étant réalisée de préférence au moins sur certaines parties à deux couches avec une couche extérieure (122a) et une couche intérieure (122b) et **en ce que** la saillie se trouve à l'intérieur de la cavité formée par les deux couches (122a, 122b), la saillie (123) étant de préférence disposée sur la couche extérieure (122a).

14. Module de coussin gonflable comprenant trois éléments de positionnement axial côté module, destiné à être utilisé dans un ensemble volant (10) selon l'une des revendications 2 à 9.

15. Corps de volant comprenant trois éléments de positionnement axial côté corps de volant, destiné à être utilisé dans un ensemble volant (10) selon l'une des revendications 10 à 13.
